# EUROPÄISCHE PATENTSCHRIFT

(11) **EP 1 012 014 B1**
(45) Veröffentlichungstag und Bekanntmachung des Hinweises auf die Patenterteilung: **03.04.2002**
(21) Anmeldenummer: 98951224.9
(22) Anmeldetag: 27.08.1998
(51) Int. Cl.: B60S 1/08

(54) **VORRICHTUNG UND VERFAHREN ZUM BETREIBEN EINES REGENSENSORS**
DEVICE AND METHOD FOR OPERATING A RAIN DETECTOR
DISPOSITIF ET PROCEDE POUR LE FONCTIONNEMENT D'UN DETECTEUR DE PLUIE

(30) Priorität: 13.09.1997 DE 19740364
(43) Veröffentlichungstag der Anmeldung: 28.06.2000
(73) Patentinhaber: ROBERT BOSCH GMBH, 70442 Stuttgart (DE)
(72) Erfinder: HOG, Norbert, D-77815 Bühl (DE)
(86) Internationale Anmeldenummer: DE9802511
(87) Internationale Veröffentlichungsnummer: WO9914087

(56) Entgegenhaltungen:
- EP-A- 0 460 180
- WO-A-94/27262
- DE-A- 4 217 390
- DE-C- 19 603 553

## Beschreibung

Die Erfindung betrifft eine Vorrichtung und ein Verfahren zum Betreiben eines Regensensors.

### Stand der Technik

Aus der EP 0 460 180 B1 (die der Erfindung am nächsten kommt) ist bereits eine Vorrichtung zur Ansteuerung einer Wischvorrichtung in Abhängigkeit von Feuchtigkeit auf einer Scheibe bekannt, mit einem optoelektronischen Regensensor, dessen Sensorsignal einerseits eine Komponente aufgrund der Anwesenheit von Feuchtigkeit auf der Scheibe (Nutzlichtanteil) und eine Komponente aufgrund des den Regensensor erreichenden Umgebungslichts (Störlichtanteil) aufweist und andererseits lediglich eine Komponente aufgrund des Umgebungslichts (Störlichtanteil) enthält. In einem ersten Intervall wird das aus Nutzlichtanteil und Störlichtanteil zusammengesetzte Sensorsignal durch erste Mittel abgetastet. Zweite Mittel tasten das Sensorsignal in einem zweiten Intervall ab, in dem nur der Störlichtanteil aufgrund des Umgebungslichts vorhanden ist. Erste und zweite Mittel sind beispielsweise Sample-Hold-Glieder. Die jeweils während des ersten und des zweiten Intervalls abgetasteten Signale werden in einem Differentialverstärker voneinander linear subtrahiert, so daß ein Ausgangssignal erhalten wird, das dem Nutzlichtanteil des Sensorsignals entspricht. Das erste und das zweite Intervall werden zeitlich eng zueinander genommen. Die Größenordnung des ersten Intervalls zur Erfassung der Benetzung der Scheibe beträgt Mikrosekunden, die des zweiten Intervalls zur Erfassung des Umgebungslichts beträgt Millisekunden.

Hierbei müssen jedoch jeweils zwei Signale verarbeitet werden. Das widerum geht zu Lasten der Auflösung des Nutzlichtanteils. Am Beispiel der Auswertung des Sensorsignales mit einem Mikrocontroller wird dies im folgenden erläutert und ist jedoch ebenfalls für einen analogen Subtrahierer relevant: Bei Regensensoren kann unter bestimmten Voraussetzungen an das Umgebungslicht, z.B. untergehende Sonne, bekannterweise der Störlichtanteil des Sensorsignales den Nutzlichtanteil weit übertreffen. Als Beispiel sei hier der Störlichtanteil um den Faktor zehn größer als der Nutzlichtanteil. Bei einem 8-Bit Mikrocontroller entfallen bei derartigen Lichtverhältnissen und maximaler Verstärkung des Sensorsignales lediglich etwa 25 Bit auf den Nutzlichtanteil. Prinzipiell liegt die minimal erfaßbare Änderung des Sensorsignals bei einem Bit und entspricht daher in diesem Fall einer detektierbaren relativen Änderung des Nutzlichtsignals von vier Prozent. Nach Vorgaben der Fahrzeughersteller müssen jedoch relative Signaländerungen kleiner als ein Prozent erkannt werden, d.h. die Signaldynamik des Regensensors sollte besser als ein Prozent sein, um einen auf die Benetzung der Scheibe abgestimmten und den Wünschen des Kraftfahrzeugfahrers entsprechenden Wischbetrieb zu erhalten.

Ferner kann der Nutzlichtanteil des Sensorsignals lediglich zeitlich punktuell nach Ablauf der zwei Intervalle im Hinblick auf die Ansteuerung eines Scheibenwischers ausgewertet werden. Eine dynamische Auswertung bzw. eine kontinuierliche Auswertung des Nutzlichtsignals in Echtzeit während des längeren ersten Intervalles ist damit nicht möglich.

Weiterhin ist aus der DE 42 17 390 A1 eine Einrichtung zur Steuerung einer Scheibenwischanlage mit einem optoelektronischen Regensensor bekannt, die den Umgebungslichtanteil aus dem Sensorsignal auskoppelt, in dem der Sender mit einer Frequenz im Bereich von größer als zwei Kilohertz moduliert wird. Das detektierte Sensorsignal in Form eines Wechselsignales mit einem durch das Umgebungslicht erzeugten Gleichstromanteil wird mittels einer bekannten Schaltung, wie z.B. einem phasenselektiven Gleichrichter, in Nutzlichtanteil und Störlichtanteil getrennt.

Darüberhinaus werden weitere Störeinflüsse des Umgebungslichts ausgeschaltet, die z.B. durch die nichtlineare Kennlinie der Strahlungsempfänger des Regensensors entstehen und eine Nichtlinearität des Nutzlichtsignales bei unterschiedlichen Umgebungslichtverhältnissen zur Folge haben. Dazu wird an einem Arbeitswiderstand der Strahlungsempfänger die abfallende Spannung erfaßt und in einem ersten Operationsverstärker zu einer Korrekturgröße aufbereitet, die einem zweiten Operationsverstärker, zusammen mit dem Nutzlichtsignal, zugeführt wird. Der zweite Operationsverstärker beseitigt die durch das Umgebungslicht hervorgerufenen Veränderungen des Sensorsignales durch das Einspeisen der Korrekturgröße und gibt ein durch die Korrekturgröße linearisiertes Nutzlichtsignal aus, das einer Steuerstufe zur Ansteuerung einer Scheibenwischanlage eine Kraftfahrzeugs zugeführt wird.

Hierbei wird jedoch lediglich die durch den Strahlungsempfänger entstandene Nichtlinearität des Sensorsignales ausgeschaltet. Die nichtlineare Kennlinie eines ebenfalls vorhandenen Verstärkers wird dabei nicht berücksichtigt.

Weiterhin wird das Sensorsignal nicht unmittelbar beim Erzeugen dessen im Regensensor linearisiert, sondern erst nach seiner Weiterverarbeitung in einem Strom-Spannungs-Konverter, in dem phasenselektiven Gleichrichter und in dem Verstärker, so daß das Sensorsignal einschließlich des Fremdlichtanteils verstärkt wird. Dies trägt wiederum zu einer Verschlechterung der Auflösung des Nutzlichtanteiles des Sensorsignales wie oben beschrieben bei.

### Vorteile der Erfindung

Die erfindungsgemäße Vorrichtung mit den Merkmalen des Anspruchs 1, beziehungsweise dies erfindungsgemäße verfahren nach dem Anspruch 8 hat den Vorteil, daß in einem ersten Intervall von einem optischen Empfänger im Regensensor lediglich die Umgebungsstrahlung erfaßt und ein dieser Umgebungsstrahlung entsprechendes Störlichtsignal ermittelt wird, so daß ein Regler in Abhängigkeit von dem Störlichtsignal Kompensationsmittel zur Kompensation des Umgebungslichts im Stromkreis des Empfängers regelt, so daß in einem zweiten an das erste anschließende Intervall, in dem der Empfänger Senderstrahlung und Umgebungsstrahlung erfaßt, direkt ein Nutzlichtsignal ermittelt wird, das im wesentlichen lediglich der Senderstrahlung entspricht.

Vorteilhaft hierbei ist, daß der Einfluß der Umgebungsstrahlung auf die Ansteuerung einer Scheibenwischanlage in dem ersten Intervall nahezu eliminiert, d.h. durch den Regler in einem Regelkreis ausgeregelt wird und daher bei der zeitlich nachfolgenden Erfassung des Sensorsignales (d.h. noch vor dessen erster Verstärkung, wie z.B. Vorverstärkung mit festem Verstärkungsfaktor) in dem für die Ansteuerung einer Einrichtung, insbesondere einer Scheibenwischvorrichtung, relevanten zweiten Intervall nicht erfaßt wird und daher in einer Auswerteschaltung zur Ansteuerung dieser Einrichtung nicht mehr berücksichtigt werden muß.

Daraus ergibt sich als weiterer Vorteil, daß der Eingang der Verstärkereinrichtung durch Umgebungsstrahlung nicht übersteuert werden kann, da bei Einstellung des Verstärkungsfaktors unter Berücksichtigung der maximal erfaßbaren Senderstrahlung im ersten Intervall die Umgebungsstrahlung ausgeregelt wird und im zweiten Intervall die Umgebungsstrahlung eliminiert ist und die maximale Senderstrahlung den Eingang gerade nicht übersteuert.

Daraus ergibt sich, daß der Arbeitspunkt des Eingangskreises, der im wesentlichen den Empfänger und die erste Verstärkereinrichtung aufweist, während des zweiten Intervalls unabhängig von dem Störlichtanteil und daher konstant ist. Eine Änderung des Störlichtanteils würde ansonsten bei einer nichtlinearen Kennlinie zu einer Änderung des erfaßten Nutzlichtanteils bei jedoch tatsächlich konstantem Nutzlichtanteil führen und somit die Erfassung des Nutzlichtes verfälschen. Dies kann evtl. zu einem Falschauslösen der Wischer führen. Durch die erfindungsgemäße Vorrichtung wird der Einfluß der Umgebungsstrahlung auf den Arbeitspunkt eliminiert.

Eine durch den Nutzlichtanteil hervorgerufene Verschiebung des Arbeitspunktes ist unkritisch, da Änderungen des Nutzlichtanteils, bedingt z.B. durch Auftreffen von Tropfen auf der Scheibe, üblicherweise größer sind als die durch die Verschiebung des Arbeitspunktes hervorgerufenen Änderungen des Nutzlichtsignales.

Wird der Arbeitspunkt der Vorrichtung in einem weiteren Verstärker eingestellt, der in der Auswerteschaltung angeordnet ist, dann geschieht diese Arbeitspunkteinstellung ebenfalls unabhängig von dem Störlichtanteil.

Ein weiterer Vorteil liegt in dem Regelkreis begründet, der den Störlichtanteil des Sensorsignales während des ersten Intervalls kontinuierlich, d.h. in Echtzeit, ausregelt und damit direkt und schnell auf Änderungen der Umgebungsstrahlung reagiert, so daß beispielsweise bei Tunnelfahrten der Wischbetrieb des Scheibenwischers nicht unerwünschterweise ausgelöst wird.

Vorteilhaft ist ebenfalls, daß bei Verwendung eines Mikrocontrollers in einer Auswerteanordnung zur Auswertung des Nutzlichtsignals in dem zweiten Intervall nicht mit der Ausblendung des Störlichtanteils belastet wird und daher auf einen Mikrocontroller mit geringeren Leistungsdaten zurückgegriffen werden kann, der Kostenvorteile bringt.

Als weiterer Vorteil ergibt sich, daß während des zweiten Intervalls das Nutzlichtsignal in der Auswerteanordnung kontinuierlich und zeitgleich, d.h. in Echtzeit, ausgewertet werden kann.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist, daß der Regler das Störlichtsignal auf einen kleinen Sollwert, der insbesondere den Wert Null annimmt, herunterregelt. Damit ist der Umgebungslichtanteil im zweiten Intervall minimiert.

Besonders vorteilhaft sind zwei mögliche Ausgestaltungen des Ausführungsbeispieles hinsichtlich der Verstärkereinrichtung für das Sensorsignal und der Kompensationsmittel, die im Stromkreis des Empfängers angeordnet sind. Sofern die Kompensationsmittel als gesteuerte Stromquelle realisiert sind, die den von der Umgebungsstrahlung erzeugten Störstrom aufnimmt und so das Beeinflussen der Verstärkereinrichtung durch den Störstrom verhindert, weist die Verstärkereinrichtung einen stromgesteuerten Eingang auf.

Sind jedoch die Kompensationsmittel als regelbarer Widerstand realisiert, an dem die zu messende und an die Verstärkereinrichtung zuführbare von dem Störstrom erzeugte Störspannung abfällt, dann weist die Verstärkereinrichtung einen spannungsgesteuerten Eingang auf. Bei einem steigenden Umgebungslichtanteil, d.h. einem zunehmenden Störstrom und einer zunehmenden Störspannung, wird der Widerstand umgekehrt proportional verringert. Der Widerstand kann beispielsweise durch einen steuerbaren Mosfet realisiert werden.

Weiterhin sind erste bzw. zweite Mittel zum Erzeugen eines Störlicht- bzw. Nutzlichsignals gegeben und z.B. als Sample-Hold-Glieder realisiert. Dies hat insbesondere den Vorteil, daß der Auswerteanordnung durch die zweiten Mittel ebenfalls in dem ersten Intervall ein kontinuierliches Signal zur Auswertung bereitgestellt wird.

Ein weiterer Vorteil ist darin zu sehen, daß die erfindungsgemäße Vorrichtung leicht in einem integrierten Schaltkreis (ASIC) aufbaubar ist.

### Zeichnung

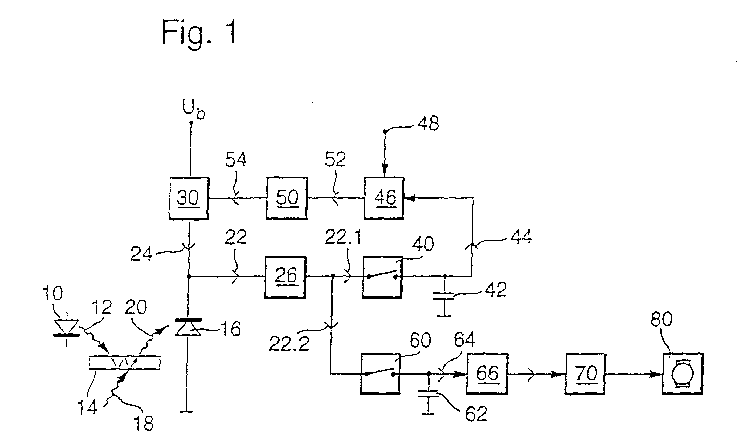

Ein Ausführungsbeispiel der Erfindung ist in der Zeichnung dargestellt und in der nachfolgenden Beschreibung näher erläutert. Es zeigt Figur 1 ein schematisches Blockschaltbild der erfindungsgemäßen Vorrichtung gemäß dem Ausführungsbeispiel.

### Beschreibung des Ausführungsbeispiels

Figur 1 zeigt ein Blockschaltbild der erfindungsgemäßen Vorrichtung. Es ist ein optoelektronischer Regensensor dargestellt, dessen Sender 10 Senderstrahlung 12 in eine Scheibe 14 einkoppelt. Diese Scheibe 14 ist beispielsweise eine Kraftfahrzeugfrontscheibe, die durch einen nicht dargestellten Scheibenwischer gewischt wird und in dessen Wischfeld der Regensensor angeordnet ist. Die Senderstrahlung 12 wird in der Scheibe 14 zu einem Bereich geleitet, in dem Strahlung 20 ausgekoppelt und auf einen Empfänger 16 des Regensensors geführt wird. Die ausgekoppelte Strahlung 20 enthält neben der Komponente der Senderstrahlung 12 weiterhin eine Komponente einer Umgebungsstrahlung 18, die beispielsweise durch Sonnenlicht oder andere Lichtquellen außerhalb oder innerhalb des Kraftfahrzeugs herrührt.

Der Empfänger 16 ist beispielsweise eine Lichtdiode (LRD bzw. LED), die in Abhängigkeit der detektierten Strahlung 20 einen Empfängerstrom 24 erzeugt.

Der Empfänger 16 ist einerseits an Masse angebunden, andererseits über Kompensationsmittel 30 an die Batteriespannung Ub bzw. Bordspannung des Kraftfahrzeugs. Die Kompensationsmittel 30 sind also im Empfängerstromkreis angeordnet und weisen beispielsweise eine gesteuerte Stromquelle oder einen regelbaren Widerstand, insbesondere einen steuerbaren Mosfet, auf.

Ein Sensorsignal 22 des Regensensors wird zwischen Empfänger 16 und den Kompensationsmitteln 30 abgegriffen. Dieses Sensorsignal 22 kann sowohl ein Spannungs- als auch ein Stromsignal sein, das zu einer Verstärkereinrichtung 26 mit spannungs- oder stromgesteuerten Eingang geleitet wird.

Die Verstärkereinrichtung 26 umfaßt zumindest einen ersten Vorverstärker, der das Sensorsignal 22 um einen konstanten Faktor verstärkt. Das in dieser Verstärkereinrichtung 26 verstärkte Sensorsignal 22.1, 22.2 wird abwechselnd einem Regelkreis zur Regelung der Kompensationsmittel 30 oder einer Auswerteschaltung zur Auswertung des Sensorsignals 22.2 hinsichtlich eines Wischbetriebs zugeführt.

Der Regelkreis weist einen ersten Schalter 40 auf. Ist der ersten Schalter 40 geschlossen, dann lädt das Sensorsignal 22.1 einen ersten Kondensator 42 auf. Die an diesem abgegriffene Spannung entspricht einem Störlichtsignal 44 und wird als Istwert bzw. Regelgröße des Regelkreises an einen Vergleicher 46 weitergeleitet. Dem Vergleicher 46 wird über einen zweiten Eingang ein Sollwert 48 als Führungsgröße vorgegeben. Das in dem Vergleicher 46 ermittelte Differenzsignal 52 als Regelabweichung wird einem Regler 50 zugeführt, der in Abhängigkeit des Differenzsignals 52 eine Stellgröße 54 an die Kompensationsmittel 30 abgibt.

Die Auswerteschaltung weist analog zum Regelkreis einen zweiten Schalter 60 und einen zweiten Kondensator 62 auf. Das in diesen ermittelte Nutzlichtsignal 64 wird über einen weiteren Verstärker 66 einer Auswerteanordnung 70 zugeführt, die wiederum das Nutzlichtsignal 64 im Hinblick auf die Ansteuerung eines Wischermotors 80 auswertet.

Im Folgenden werden erste bzw. zweite Mittel eingeführt, die u.a. die Funktion von Sample-Hold-Gliedern umfassen und im wesentlichen den ersten Schalter 40 und den ersten Kondensator 42 bzw. den zweiten Schalter 60 und den zweiten Kondensator 62, vorzugsweise auch jeweils die Verstärkereinrichtung 26, umfassen.

Die Auswerteanordnung 70 ist üblicherweise durch einen Mikrocontoller realisiert, kann jedoch auch eine analoge Schaltung umfassen.

Die Funktionsweise der erfindungsgemäßen Vorrichtung nach Figur 1 wird im Folgenden näher beschrieben. Hierbei ist nun das Sensorsignal 22 ein Spannungssignal, das auf einen spannungsgesteuerten Eingang der Verstärkereinrichtung 26 gelegt wird und die Kompensationsmittel 30 sind durch einen steuerbaren Mosfet realisiert.

Mittels der Senderstrahlung 12 des Regensensors wird die Benetzung der Scheibe 14 mit Feuchtigkeit bzw. Wasser durch den zum Empfänger 16 gelangenden Anteil erfaßt. Daher wird dieser Anteil der gesamten vom Empfänger 16 detektierten Strahlung 20 als sogenannter Nutzlichtanteil bezeichnet. Jedoch kann aufgrund des Funktionsprinzips des optoelektronischen Regensensors ebenfalls Umgebungsstrahlung 18 von außen in die Scheibe 14 und von dort auf den Empfänger 16 gelangen. Diese Umgebungsstrahlung 18 überlagert sich der Senderstrahlung 12 und wirkt sich daher störend auf die Erfassung der Benetzung der Scheibe 14 aus, so daß im folgenden die Komponente der Strahlung 20, die von der Umgebungsstrahlung 18 herrührt, als Störlichtanteil bezeichnet wird.

Mit der erfindungsgemäßen Vorrichtung ist es möglich, im Eingangskreis der Schaltung, d.h. Empfänger 16 und Verstärkereinrichtung 26, den Nutzlichtanteil ohne den Störlichtanteil der Strahlung 20 zu erfassen. Hierzu wird der Sender 10 getaktet betrieben, so daß dieser in einem ersten Intervall ausgeschaltet und in einem zweiten Intervall eingeschaltet ist. Synchron dazu werden ebenfalls die Schalter 40, 60 geschaltet. Die jeweilige Intervallänge bewegt sich in der Größenordnung von Millisekunden und beträgt beispielsweise für das erste Intervall fünf Millisekunden und für das zweite Intervall eine Millisekunde.

Während des ersten Intervalls geschieht nun folgendes: Die vom Empfänger 16 erfaßte Strahlung 20 enthält nun lediglich eine von der Umgebungsstrahlung 18 herrührende Komponente. In Abhängigkeit von der Intensität der Strahlung 20 erzeugt der Empfänger 16 einen Strom 24. Der Empfängerstrom 24 führt an dem Widerstand des Mosfets 30 zu einem Spannungsabfall, der als Sensorsignal 22 in der Verstärkereinrichtung 26 verstärkt wird.

Während des ersten Intervalls ist der erste Schalter 40 geschlossen und der zweite Schalter 60 geöffnet, so daß das verstärkte Sensorsignal 22.1 den ersten Kondensator 42 lädt. Die ersten Mittel 40, 42 erzeugen folglich ein Störlichtsignal 44, das lediglich die durch den Empfänger 16 detektierte Umgebungsstrahlung 18 wiedergibt. Dem im Vergleicher 46 vorgegebenen Sollwert 48 wird theoretisch der Wert Null zugeordnet. Da dies jedoch schwer zu realisieren ist, wird ein Sollwert 48 von nahezu Null vorgeben. Das Störlichtsignal 44 ist üblicherweise größer als Null. Bekannterweise bildet der Vergleicher 46 des Regelkreises die Differenz aus Sollwert 48 und Störlichtsignal 44, so daß der Regler 50 den Widerstand des Mosfets 30 während des Intervalls derart regelt, insbesondere verringert, daß das Sensorsignal 22 sich verringert, dabei der Kondensator 42 über das Sensorsignal 22.1 entladen wird bis in Folge das Störlichtsignal 44 nahezu Null wird.

Der im ersten Intervall geregelte Widerstandswert des Mosfets 30 bleibt nun im zweiten Intervall erhalten.

Während des zweiten Intervalls ist der erste Schalter 40 geöffnet und der zweite Schalter 60 geschlossen. Der Regelkreis ist folglich ausgeschaltet und es findet keine weitere Regelung der Kompensationsmittel 30 während des zweiten Intervalls statt. Da während des zweiten Intervalls nun zusätzlich zur Umgebungsstrahlung 18 auch der mit der Feuchtigkeit auf der Scheibe sich ändernde Anteil der Senderstrahlung 12 durch den Empfänger 16 erfaßt wird, jedoch die Kompensationsmittel 30 den Einfluß der Umgebungsstrahlung 18 auf das Sensorsignal 22 kompensieren, enthält das Sensorsignal 22 lediglich den von der Senderstrahlung 12 herrührenden Nutzlichtanteil der Strahlung 20. Das Sensorsignal 22 wird analog zu den ersten Mittel 40, 42 des Regelkreises in der Auswerteschaltung durch zweite Mittel 60, 62 zu einem Nutzlichtsignal 64 verarbeitet. Das Nutzlichtsignal 64 wird anschließend in dem weiteren Verstärker 66 verstärkt, in dem beispielsweise ebenfalls ein Arbeitspunkt eingestellt werden kann, und in der Auswerteanordnung 70 ausgewertet, beispielsweise mit dort abgelegten Einschalt- und Ausschaltschwellen verglichen, so daß bei Über- oder Unterschreiten einer dieser Schwellen ein Wischbetrieb, z.B. Dauerwischbetrieb, ein- oder ausgeschaltet wird.

Daraus ergibt sich, daß das erste und zweite Intervall zeitlich nicht miteinander vertauscht werden können, da der Sender 10 zuerst eingeschaltet und anschließend ausgeschaltet wird.

In einer bevorzugten Ausführung sind die Einschaltzeiten des Senders 10 klein, beipielsweise in der Größenordnung von einer Millisekunde. In diesem Fall wird während des kurzen zweiten Intervalls durch das Sample-Hold-Glied als zweite Mittel 60, 62 über die Sensorsignale 22.2 der zweite Kondensator 62 geladen und das Nutzlichtsignal 64 ermittelt, das bei nachfolgend geöffneten zweiten Schalter 60 im Kondensator 62 zwischengespeichert ist und in der Auswerteanordnung 70 verarbeitet wird. Bei dem nächstmaligen Schließen des zweiten Schalters 60 kann der Kondensator 62 über das Sensorsignal 22.2 geladen oder entladen werden.

Dies hat den Vorteil, daß der Sender 10, der üblicherweise als Light Emitting Diode (LED) realisiert wird, nur kurz bestromt wird und daher nur eine relativ geringe Verlustleistung an diesem 10 abfällt.

Bei einer längeren Dauer des zweiten Intervalls können kontinuierlich Werte des Nutzlichtsignals 64 am zweiten Kondensator 62 ermittelt und durch die Auswerteanordnung 70 ausgewercet werden, da der zweite Kondensator 62 bei geschlossenem zweiten Schalter 60 während des zweiten Intervalls über das Sensorsignal 22.2 geladen und wieder entladen wird. Folglich kann auf diese Art und Weise eine dynamische Auswertung realisiert werden.

Welche Intervalldauern nun tatsächlich realisiert werden, hängt jedoch von den im Einzelfall gestellten Anforderungen an die erfindungsgemäße Vorrichtung ab.

Wie eingangs erwähnt, umfassen die Kompensationsmittel 30 alternativ zur vorn beschriebenen Ausführung eine durch den Regler 50 gesteuerte Stromquelle, die den Strom 24, der durch die Umgebungsstrahlung 18 erzeugt wird, aufnimmt und damit kompensiert. In diesem Fall ist das Sensorsignal 22 ein Stromsignal, das einem stromgesteuerten Eingang der Verstärkereinrichtung 26 zugeführt wird. Die oben beschriebene Funktionsweise der erfindungsgemäßen Vorrichtung bleibt dadurch unberührt.

In einer äquivalenten Ausgestaltung des Ausführungsbeispieles sind der Empfänger 16 und die Kompensationsmittel 30 in umgekehrter Reihenfolge in dem Empfängerstromkreis angeordnet, so daß die Kompensationsmittel 30 nicht gegen Batteriespannung Ub bzw. Pluspol sondern gegen Masse gepolt sind.
Als Kompensationsmittel 30 sind beispielsweise ein regelbarer Widerstand oder eine steuerbare Stromsenke zu verwenden.

## Patentansprüche

1. Vorrichtung zum Betreiben eines Regensensors zur Erfassung der Benetzung einer Scheibe (14) mit Feuchtigkeit zur benetzungsabhängigen Austeuerung einer Einrichtung (80), insbesondere einer Scheibenwischvorrichtung für Kraftfahrzeuge, mit einem Sender (10), der eine Senderstrahlung (12) an einer ersten Stelle in die Scheibe (14) abgibt, mit einem Empfänger (16), der eine aus der Scheibe (14) an einer zweiten Stelle ausgekoppelte Strahlung (20) erfaßt und in Abhängigkeit von der erfaßten Strahlungsintensität ein Sensorsignal (22) an eine Verstärkereinrichtung (26) mit einer nachgeschalteten, die Einrichtung (80) ansteuernden Auswerteanordnung (70) abgibt, wobei die Strahlung (20) eine Senderstrahlungs-Komponente (12) in Abhängigkeit von Feuchtigkeit auf der Scheibe (14) und/oder eine Umgebungsstrahlungs-Komponente (18) aufweist, ferner mit ersten Mitteln (40, 42), welche in einem ersten Intervall zur Erfassung der Umgebungsstrahlung (18) bei ausgeschaltetem Sender (10) das in der Verstärkereinrichtung (26) verstärkte Sensorsignal (22.1) erfassen und aus diesem (22.1) ein der Umgebungsstrahlung (18) entsprechendes Störlichtsignal (44) ermitteln, welches einem Regler (50) zugeführt wird, der das Störlichtsignal (44) über im Stromkreis des Empfängers (16) angeordnete Kompensationsmittel (30) auf einen Sollwert regelt, und mit zweiten Mitteln (60, 62), welche in einem zweiten dem ersten direkt nachgeordneten Intervall zur Erfassung der Senderstrahlung (12) und der Umgebungsstrahlung (18) bei eingeschaltetem Sender (10) das verstärkte Sensorsignal (22.2) erfassen, welches durch die Kompensationsmittel (30) beeinflußt ist und die zweiten Mittel (60, 62) aus diesem verstärkten Sensorsignal (22.2) ein im wesentlichen der Senderstrahlung (12) entsprechendes Nutzlichtsignal (64) ermitteln.

2. Vorrichtung nach Anspruch 1, **dadurch gekennzeichnet, daß** der sollwert (48) einen kleinen Pegel aufweist, insbesondere nahezu Null Volt.

3. Vorrichtung nach Anspruch 1, **dadurch gekennzeichnet, daß** die Verstärkereinrichtung (26) einen stromgesteuerten Eingang aufweist und die Kompensationsmittel (30) eine gesteuerte Stromquelle oder eine gesteuerte Stromsenke umfassen.

4. Vorrichtung nach Anspruch 1, **dadurch gekennzeichnet, daß** die Verstärkereinrichtung (26) einen spannungsgesteuerten Eingang aufweist und die Kompensationsmittel (30) einen regelbaren widerstand, insbesondere einen steuerbaren Mosfet, umfassen.

5. Vorrichtung nach Anspruch 1, **dadurch gekennzeichnet, daß** die ersten Mittel (26, 40, 42) und die zweiten Mittel (26, 60, 62) Sample-Hold-Glieder umfassen.

6. Vorrichtung nach Anspruch 1, **dadurch gekennzeichnet, daß** die ersten Mittel (26, 40, 42) dem Regler (50) ein kontinuierliches Signal (44) über das erste Intervall bereitstellen und/oder die zweiten Mittel (26, 60, 62) der Auswerteanordnung (70) ein kontinuierliches Signal (64) über das zweite Intervall zur Auswertung bereitstellen.

7. Vorrichtung nach Anspruch 1, **dadurch gekennzeichnet, daß** die Dauer des ersten bzw. zweiten Intervalls in der Größenordnung von Millisekunden liegt, insbesondere fünf Millisekunden bzw. eine Millisekunde.

8. Verfahren zum Betreiben eines Regensensors zur Erfassung der Benetzung einer Scheibe (14) mit Feuchtigkeit zur benetzungsabhängigen Ansteuerung einer Einrichtung (80), insbesondere einer Scheibenwischvorrichtung für Kraftfahrzeuge, mit einem Sender (10), der eine Senderstrahlung (12) an einer ersten Stelle in die Scheibe (14) abgibt, mit einem Empfänger (16), der eine aus der Scheibe (14) an einer zweiten Stelle ausgekoppelte Strahlung (20) erfaßt und in Abhängigkeit von der erfaßten Strahlungsintensität ein Sensorsignal (22) an eine Verstärkereinrichtung (26) mit einer nachgeschalteten Auswerteanordnung (70) abgibt, wobei die Strahlung (20) eine Senderstrahlungs-Komponente (12) in Abhängigkeit von Feuchtigkeit auf der Scheibe (14) und eine Umgebungsstrahlungs-Komponente (18) aufweist, und wobei in einem ersten Intervall zur Erfassung der Umgebungsstrahlung (18) bei ausgeschaltetem Sender (10) das in der Verstärkereinrichtung verstärkte Sensorsignal (22.1) ersten Mitteln (40, 42) zugeführt wird, die aus diesem ein der Umgebungsstrahlung (18) entsprechendes Störlichtsignal (44) ermitteln, das mittels einee Reglers (50) über im Stromkreis des Empfängers (16) angeordnete Kompensationsmittel (30) auf einen Sollwert geregelt wird, und daß in einem zweiten dem ersten direkt nachgeordneten Intervall zur Erfassung der Senderstrahlung (12) und der Umgebungsstrahlung (18) bei eingeschaltetem Sender (10) das verstärkte Sensorsignal (22.2) zweiten Mitteln (60, 62) zugeführt wird, von denen. aus dem verstärkten Sensorsignal (22.2) ein im wesentlichen der Senderstrahlung (12) entsprechendes Nutzlichtsignal (64) ermittelt wird.

## Claims

1. Device for operating a rain sensor for detecting the wetting of a glass pane (14) with moisture in order to actuate a device (80), in particular a glass pane for motor vehicles, as a function of the wetting, having a transmitter (10) which outputs transmitter radiation (12) into the glass pane (14) at a first location, having a receiver (16) which senses radiation (20) extracted from the glass pane (14) at a second location and outputs a sensor signal (22) as a function of the sensed radiation intensity, to an amplifier device (26) with a downstream evaluation arrangement (70) which actuates the device (80), **characterized in that** the radiation (20) has a transmitter radiation component (12) as a function of moisture on the glass pane (14) and/or an ambient radiation component (18), in addition having first means (40, 42) which, in a first interval for sensing the ambient radiation (18) with the transmitter (10) switched off, sense the sensor signal (22.1) which is amplified in the amplifier device (26), and determine from such sensor signal (22.1) a stray light signal (44) which corresponds to the ambient radiation (18) and is fed to a regulator (50) which regulates the stray light signal (44) to a setpoint value using compensation means (30) arranged in the circuit of the receiver (16), and having second means (60, 62) which, in a second interval directly following the first interval, sense the amplified sensor signal (22.2) in order to sense the transmitter radiation (12) and the ambient radiation (18) with the transmitter (10) switched on, said sensor signal (22.2) being influenced by the compensation means (30), and the second means (60, 62) determining from this amplified sensor signal (22.2) a useful light signal (64) which corresponds essentially to the transmitter radiation (12).

2. Device according to Claim 1, **characterized in that** the setpoint value (48) has a low level, in particular virtually zero volts.

3. Device according to Claim 1, **characterized in that** the amplifier device (26) has a current-controlled input, and the compensation means (30) comprise a controlled current source or a controlled current sink.

4. Device according to Claim 1, **characterized in that** the amplifier device (26) has a voltage-controlled input, and the compensation means (30) comprise a resistor which can be regulated, in particular a controllable Mosfet.

5. Device according to Claim 1, **characterized in that** the first means (26, 40, 42) and the second means (26, 60, 62) comprise sample-and-hold elements.

6. Device according to Claim 1, **characterized in that** the first means (26, 40, 42) provide the regulator (50) with a continuous signal (44) relating to the first interval, and/or the second means (26, 60, 62) provide the evaluation arrangement (70) with a continuous signal (64) relating to the second interval, for evaluation.

7. Device according to Claim 1, **characterized in that** the duration of the first and second intervals is of the order of magnitude of milliseconds, in particular five milliseconds or of one millisecond.

8. Method for operating a rain sensor for sensing the wetting of a glass pane (14) with moisture in order to actuate a device (80), in particular a glass pane for motor vehicles, as a function of the wetting, having a transmitter (10) which outputs transmitter radiation (12) into the glass pane (14) at a first location, having a receiver (16) which senses radiation (20) extracted from the glass pane (14) at a second location, and outputs, as a function of the sensed radiation intensity, a sensor signal (22) to an amplifier device (26) with a downstream evaluation arrangement (70), the radiation (20) having a transmitter radiation component (12) as a function of moisture on the glass pane (14) and an ambient radiation component (18), and in which case, in a first interval, the sensor signal (22.1) amplified in the amplifier device is fed to first means (40, 42) in order to sense the ambient radiation (18) with the transmitter (10) switched off, said first means (40, 42) determining from said sensor signal (22.1) a stray light signal (44) which corresponds to the ambient radiation (18) and which is regulated to a location value by means of a regulator (50) using compensation means (30) arranged in the circuit of the receiver (16), and in that, in a second interval which directly follows the first, the amplified second sensor signal (22.2) is fed to second means (60, 62) in order to sense the transmitter radiation (12) and the ambient radiation (18) with the transmitter (10) switched on, a useful light signal (64) which corresponds essentially to the transmitter radiation (12) being determined from the amplified sensor signal (22.2) by said second means (60, 62).

## Revendications

1. Dispositif de mise en oeuvre d'un détecteur de pluie pour détecter l'humidité sur une vitre (14) pour commander une installation (80) en fonction du mouillage, notamment un dispositif d'essuie-glace de véhicule automobile, comprenant :
un émetteur (10) qui émet un rayonnement (12) en un premier endroit de la vitre (14), un récepteur (16) qui détecte le rayonnement (20) découplé en un second endroit de la vitre (14) et qui en fonction de l'intensité de rayonnement reçue, fournit un signal de détecteur (22) à une installation d'amplification (26) suivie d'un dispositif d'exploitation (70) qui commande l'installation (80), le rayonnement (20) comprenant une composante de rayonnement d'émetteur (12) dépendant de l'humidité déposée sur la vitre (14) et/ou une composante de rayonnement ambiant (18),
en outre des premiers moyens (40, 42) qui détectent dans un premier intervalle pour la détection du rayonnement ambiant (18) le signal de détecteur (22.1) amplifié par l'installation d'amplification (26), l'émetteur (10) étant coupé, pour déterminer à partir de ce signal (22.1), un signal de lumière parasite (44) correspondant au rayonnement ambiant (18),
ce signal étant appliqué à un régulateur (50) qui régule le signal de lumière parasite (44) sur une valeur de consigne par des moyens de compensation (30) montés dans le circuit du récepteur (16), et
des seconds moyens (60, 62) qui détectent dans un second intervalle suivant directement le premier intervalle, le signal de détecteur (22.2) amplifié, comprenant le rayonnement d'émetteur (12) et le rayonnement ambiant (18), l'émetteur (10) étant branché, ce signal de détecteur influençant les moyens de compensation (30), et
à partir de ce signal de détecteur amplifié (22.2) les seconds moyens (60, 62) déterminent un signal de lumière utile (64) correspondant essentiellement au rayonnement d'émetteur (12).

2. Dispositif selon la revendication 1,
**caractérisé en ce que**
la valeur de consigne (48) a un niveau faible notamment un niveau pratiquement de zéro volt.

3. Dispositif selon la revendication 1,
**caractérisé en ce que**
l'installation d'amplification (26) comporte une entrée commandée en courant et les moyens de compensation (30) comportent une source de courant commandée ou un puits de courant commandé.

4. Dispositif selon la revendication 1,
**caractérisé en ce que**
l'installation d'amplification (26) comporte une entrée commandée en tension et les moyens de compensation (30) une résistance réglable, notamment un Mosfet commandé.

5. Dispositif selon la revendication 1,
**caractérisé en ce que**
les premiers moyens (26, 40, 42) et les seconds moyens (26, 60, 62) comportent des éléments d'échantillonnage et de maintien.

6. Dispositif selon la revendication 1,
**caractérisé en ce que**
les premiers moyens (26, 40, 42) fournissent au régulateur (50) un signal continu (44) dans le premier intervalle et/ou les seconds moyens (26, 60, 62) fournissent au dispositif d'exploitation (70) un signal continu (64) dans le second intervalle, pour l'exploiter.

7. Dispositif selon la revendication 1,
**caractérisé en ce que**
la durée du premier ou du second intervalle se situe dans l'ordre de grandeur des millisecondes, notamment de cinq millisecondes ou d'une milliseconde respectivement.

8. Procédé de mise en oeuvre d'un détecteur de pluie pour détecter le mouillage d'une vitre (14) avec de l'humidité pour commander une installation (80) en fonction de l'humidité, notamment un dispositif d'essuie-glace de véhicule automobile comprenant :
un émetteur (10) qui fournit un rayonnement (12) à un premier endroit de la vitre (14),
un récepteur (16) qui détecte le rayonnement (20) découplé en un second endroit de la vitre (14) et qui en fonction de l'intensité du rayonnement détecté fournit un signal de détecteur (22) à une installation d'amplification (26) suivie d'un dispositif d'exploitation (10),
le rayonnement (20) ayant une composante de rayonnement d'émetteur (12) variant en fonction de l'humidité déposée sur la vitre (14) et une composante de rayonnement ambiant (18), selon lequel
dans un premier intervalle, pour détecter le rayonnement ambiant (18), l'émetteur (10) étant coupé, on applique le signal de détecteur (22.1) amplifié par l'installation d'amplification à des premiers moyens (40, 42) qui déduisent de ce signal un signal de lumière parasite (44) correspondant à ce rayonnement ambiant (18), et ce signal (44) est régulé par un régulateur (50) sur une valeur de consigne par des moyens de compensation (30) montés dans le circuit de courant du récepteur(16), et
dans un second intervalle qui fait directement suite au premier intervalle, pour détecter le rayonnement d'émetteur (12) et le rayonnement ambiant (18), l'émetteur (10) étant branché, on applique le signal de détecteur amplifié (22.2) à des seconds moyens (60, 62) qui déterminent à partir du signal de détecteur amplifié (22.2) un signal de lumière utile (64) qui correspond principalement au rayonnement d'émetteur (12).
